# EUROPEAN PATENT APPLICATION

(11) **EP 4 528 909 A1**
(43) Date of publication of application: **26.03.2025**
(21) Application number: 24173155.3
(22) Date of filing: 29.04.2024
(51) Int. Cl.: H01M 50/519, H01M 50/521, H01M 10/42, H01M 50/526, H01R 4/04

(54) **CONNECTION SYSTEM**

(30) Priority: 01.05.2023 NL 2034742
(71) Applicant: ALT Technologies B.V., 3565 AK Utrecht (NL)
(72) Inventor: Sminia, Jelmer Douwe, Houten (NL)
(74) Representative: Nederlandsch Octrooibureau

(57) **Abstract**

A connection system for providing a replaceable electrical connection to a contact pad of an electrical component. The system includes an electrical conductor having a conductive core with a body section and at least a first end section. The conductive core is electrically insulated except for the end section which has a contact surface for electrical connection with the contact pad. An electrically conductive adhesive is provided on the contact surface for connecting with the contact pad. The connection can be exchanged by cutting away the body section of an existing connection and applying a new connection onto or adjacent to the existing installed end section.

## Description

### FIELD OF THE INVENTION

The present invention relates to a connection system for providing a replaceable electrical connection between two components e.g. for connecting between contact pads of printed circuit boards of batteries in a battery management system.

### BACKGROUND OF THE INVENTION

There are many situations where connections are required between electrical components forming part of a larger system or device. These connections are generally made during manufacturing of the device and their nature will largely be dictated by the method of manufacture and possible requirements of serviceability. The choice may also depend on the nature of the current, voltage or signal that is to be transmitted across the connection.

Typical connections include permanent connections such as soldered or printed connections and replaceable connections such as plugs, slots, bolts, springs and the like. Permanent connections are not intended to be repeatedly opened or disconnected but may nevertheless require replacement e.g. when a component has failed and requires replacement. The present invention is particularly concerned with such connections between components, where periodic replacement may be required without damage to the components themselves.

One particular area of interest is in the field of power storage. In an ongoing effort for electrification of systems there is a high demand for battery based electrical energy sources. Such battery based energy sources can act as backup power systems or provide the main energy for standalone systems such as encountered in e.g. the automotive industry, off-grid energy storage or home battery systems. These battery based systems comprise of a plurality of battery cells and systems having several hundred individual battery cells are not uncommon.

A battery management system can monitor and help optimize the electrical performance of the batteries in a battery system and ensure its safety. Each battery cell and its electrical and thermal properties can thus be monitored e.g. individually by its own electronic module (battery cell module). Information about the battery cell and its electrical performance or temperature, gathered by the battery cell module can be communicated to e.g. hubs containing microcontrollers of the battery management system or the like, either directly or via daisy-chaining several modules. This information can then be used for maintenance purposes, for triggering safety procedures e.g. battery cell shutoff to prevent thermal run away or for triggering a servicing action upon underperformance identification of a battery, e.g. replacing a battery cell.

Currently the transfer of electrical signals (e.g. communication) between the battery cell modules themselves or to the hubs uses wired connectors comprising assemblies of clamping/locking mechanisms or spade connectors. These assemblies are I) relatively costly, II) space consuming and III) often do not lend themselves for automated installation. An additional aspect is IV) serviceability. Solving aspects I) **-** III) by employing a permanent electrical connection method such as e.g. welding or soldering, comes at a detriment to serviceability (increasing servicing time and potentially difficult to carry out).

It would be desirable to provide an alternative connection system that alleviates at least some of the above identified problems.

### SUMMARY OF THE INVENTION

According to the invention there is provided a connection system for providing a replaceable electrical connection to a contact pad of a printed circuit board (or the like), comprising an electrical conductor comprising a conductive core having a body section and at least a first end section, wherein the conductive core is electrically insulated except for the end section; wherein the end section has a contact surface for electrical connection with the contact pad and an electrically conductive adhesive provided on the contact surface for connecting with the contact pad. Currently the transfer of electrical signals (e.g. communication) between components uses wired connectors comprising assemblies of clamping and/or locking mechanisms. These assemblies are relatively costly, space consuming and often do not lend themselves for automated installation. By the use of an electrically conductive adhesive, a relatively cheap and simple connection can be achieved that is less complex to install than welded or soldered connections. The system thus presents a solution for reducing cost and space, while permitting automated installation and improving serviceability.

The connection system has a conductive core that may be of any suitably conducting material. In particular, metal may be preferred as it is relatively low cost, flexible and ductile. In a preferred embodiment the core comprises copper. This material is particularly suitable due to its high conductivity and reasonable price. It is a commonly applied material in industry and available for bulk processes in a wide range of sizes, shapes and implementations. In particular, cold-rolled copper foil is preferred. Aluminium is an alternative possibility, particularly in the form of aluminium foil. For use with a battery module, there may be advantage in that the battery cell itself is generally made of aluminium. It will be understood that although reference is given to metals, these will generally be alloys, being suitably soft to ensure good flexibility.

The core may be provided in the form of conductive ink. There is a multitude of conductive inks available, for example silver inks, copper inks, conductive polymer, carbon/graphene inks or carbon nanotubes inks. This conductive ink could be printed by means of e.g. silkscreen or flexographic printing onto a substrate layer in a required layout to provide a conductive core.

A further applicable method for providing a conductive core can be the use of powder coated films. Here, the conductive core is provided by an electrically conductive powder comprising e.g. metal that is deposited on a substrate layer of plastic e.g. PET. An example of such a film is the Hanita Copper Skin^{™} Conductive PET Film available from Avery Dennison. Such foils may be delivered with a full surface conductive layer, whereby portions that are not required may be lasered away or otherwise removed.

The conductor may be provided in various dimensions and configurations, depending upon requirements. In an embodiment, the body section has a flat cross-sectional shape i.e. having a width that is greater than its thickness. This is particularly convenient as it supports manufacturing from strip like materials. These can either consist of precut metal strips that are supplied in bulk e.g. on tape or from reeled plate/strip that is cut to specification. In addition to supporting processing and manufacture, the flat cross-sectional shape of the conductor is also advantageous in relation to the end section. This can ensure a large electrically conductive contact surface which may be an improvement over round or oval cross-sectional shapes..

The thickness of the body section may be determined by the required cross-sectional area in relation to the material properties of the conducting material and its intended use. It may also depend on the manufacturing method. If conductive ink is used the thickness of the body section may be from one to several microns e.g. from 4 microns to 8 microns. In cases where metal strip or sheet/foil is used, thicknesses of several tens to hundreds of microns can be used e.g. 20 microns to 50 microns. For the purpose of electrical signal transfer between sensors and other electric components and/or printed circuit boards, or low current applications such as mobile handheld devices, a body section thickness of between 1 micron and 200 microns may suffice, preferably having a thickness between 20 microns and 40 microns.

The width of the body section is related to the thickness of the body section via the cross-section required for the application. In contrast to the thickness of the body section which is mainly driven by the availability of suitable materials, the width of the body section may be chosen more freely. In general it will be greater than 150 microns, which is the minimum pitch for IC connectors. Depending on the thickness of the body section, for supporting electrical signals transfer and low power applications a width between 400 microns and 15 mm would suffice, preferably widths are between 0.7 mm to 5 mm. The overall cross-sectional area of the body section may preferably be between 600 microns2 and 600 000 microns2, preferably 1 000 microns2 to 400 000 microns2. In general, the connector will be used to transmit signals of less than 1 A, generally below 200 mA and often below 1 mA.

Any appropriate material may be used for the electrical insulation. In a preferred embodiment, flexible and resilient plastic material will be used. Preferred materials include flexible polymers such as polyester, polyimide, polypropylene, polyethylene, and/or PET based films. Although the insulating value of the chosen material may be important, so too is its suitability for automated production. One method of production is by lamination. In the production of labels, i.e. die-cutting processes, lamination of multiple layers of varying materials is often performed and similar techniques may be implemented to make connection systems as presently described. In such a process the body section may be laminated in between insulating material layers such as the aforementioned flexible polymers. In addition to a conductive core, laminated between insulating layers, the connection system may include additional layers such as adhesive layers e.g. between the conductive core and the insulating layers e.g. for fixation of the metal foil or metal powder making up the conductive core or electrically conductive materials for electric shielding e.g. electromagnetic interference shielding. Other layers that may be included include decorative or informational layers comprising colors and/or text, adhesive layers e.g. for externally physically securing the connection system to an object or surface, protective layers and removable or peelable layers.

The end section may also have any suitable shape, depending on the intended application and the design criteria. In preferred embodiments, the end section may be flat, in particular, matching the body section. The width of the end section can be larger than the width of the body section. In other embodiments the end section may have a width that equals the width of the body section. In similar fashion, the thickness of the end section may be less than that of the body section. Nevertheless, it will be understood that an end section having an equal thickness may be most convenient for production purposes. Additionally, the in-plane shape of the end section may differ to that of the body section. The end section can have any shape required. A few potential shapes are: circular, square, star shape, or triangular. A square or rectangular shape may be preferred in terms of maximizing the useful contact surface.

The end section may have a top side and a bottom side, with at least one of these sides provided with a contact surface. If only one side is provided with a contact surface, the other side of the end section may be insulated. In an embodiment, both the top side and the bottom side may be provided with a contact surface. The size of the required contact surface may be driven by several factors, in particular, the area of adhesive required to ensure an adequate electrical and mechanical connection. Manufacturing aspects and the available space on the component to which connection is to be made may also be relevant. The size of the contact surface may be between 2 mm² and 400 mm², preferably between 3 mm² and 25 mm².

Prior to use of the connection system, protection may be applied over the contact surface, preferably using a removable strip. This protection can be in the form of a protective layer or cover and may be applied on either a bare contact surface or on the electrically conductive adhesive. In cases where a conductive adhesive is present on the contact surface the protection may consist of a liner foil such as siliconized backing paper or PET foil or the like.

An alternative form of protection may be provided that remains in place on the contact surface during use and is only removed for servicing the connection. Such a strip will be referenced in the following as a cover strip and will generally be electrically insulating. In cases where no adhesive is present on the contact surface, the cover strip may comprise a polymer foil, in particular an insulating foil, having a tacky layer suitable for removable connection to the contact surface. It will be understood that the tacky layer must be at least sufficient to prevent accidental removal during prolonged use either due to mechanical interaction or environmental degradation. It must also be removable without residue, if good electrical connection is to be made. Alternatively, the cover strip may be attached using conductive adhesive. In this case, it is of no consequence if residue remains, since the residue should still be conductive. A further alternative is the use of static foil, adhered by means of static attraction and without use of adhesives. Such static foils, usually made of plastic, are well know for protecting clean metal surfaces prior to use. For vehicle battery application, the system will generally be present in a sealed battery compartment. In this case, the primary concern would be temperature, including ageing requirements to simulate the vehicle life time for example exceeding 408 hours at 90 degrees C or 24 hours at -40 degrees.

The electrically conductive adhesive preferably provides a means of permanent mechanical fixation of the end section to the contact pad of a component to be connected. It also ensures electrical conduction between the end section and contact pad through at least the adhesive thickness. The thickness of the adhesive may be between 10 µm and 200 µm, preferably between 20 µm and 80 µm. The adhesive may have a constant thickness over the contact surface. Permanent fixation may take place by activation of the adhesive according to its curing process. This activation can be initiated by means of for example light (i.e. photo activation), elevated temperature (i.e. thermal activation) or by mechanical pressure (i.e. pressure sensitivity). Pressure sensitive adhesive is preferred as this type of adhesive has proven to be cost efficient and provides less risk upon installation for e.g. battery applications as compared to thermally activated adhesives, where generated heat may also affect the nearby environment, e.g. the battery cell. On the other hand, thermally activated adhesives may have better long-term reliability.

Any suitable electrically conductive adhesive may be provided, in particular depending on the nature of the materials being connected. It will be understood that if both the conductive core and the contact pad are of the same material, then the adhesive need only be compatible with that material. When the core and the contact pad are of different materials, the adhesive must be compatible with both materials or further compatibility layers may be required. Commercially available electrically conductive adhesives can be acrylic, epoxy or rubber based. Acrylic based adhesives have been shown to have good adhesion with common PCB substrates such as copper, gold, aluminium and stainless steel. It does so over a wide temperature range, reaching from -40 degrees Celsius to +150 degrees Celsius. Preferably, the adhesive is conductive at least in the Z-direction and may comprise conductive particles made of or coated with e.g. carbon, silver, nickel, lead, tin, gold, copper, aluminium The particles may have sizes in the range of 5 microns to 50 microns and may vary in shape from rods and fibres to spheres. The size and packing density of the particles may determine the area of the contact surface required to achieve a good electrical connection. In general, commercially available conductive adhesives can easily achieve adequate contact with just 0.5 mm2 to 5 mm2 of contact and this is thus non critical for the larger contact surfaces presently contemplated. In certain embodiments, the area of the conducting adhesive may be greater than the area of the electrical contact surface or of the contact pad. The adhesive may thus connect to areas around the contact surface and/or contact pad e.g. to increase the mechanical strength or to protect the respective electrical connectors.

The adhesive is also preferably permanent, to the extent that it may be difficult or even impossible to disconnect it without permanently disrupting or damaging the connection system. In an embodiment, the adhesive may have a peel off strength (according to ASTM D3330 ) of at least 0.5 N/cm, preferably 3 N/cm or even 50 N/cm. On the other hand, a removable connection may also be contemplated, since any adhesive residues remaining will themselves be conductive and not detrimental to a further connection.

The disclosed connection system may be used in any number of different configurations and locations where the use of a connection using electrically conductive adhesive is applicable. In a preferred embodiment, the connection system is intended for connecting two electrical components. To this end the conductive core consists of a body section extending between a first end section and a second end section. The first end section may connect with a contact pad on the first electrical component and the second end section may connect with the contact pad of the second electrical component.

The length of the body section will be chosen as required by the application. It can be understood that for most applications in battery management systems or the like, lengths of the body section may be in the order of from 1 cm to 500 cm, preferably from 2 cm to 200 cm, more preferably from 4 cm to 150 cm.

In other embodiments, the connection system may comprise more than two end sections. Nowadays, it is not uncommon in electrical systems to monitor a plurality of sensors and actuators in parallel. This may require a number of electrical interconnects running in parallel between components and control hubs. Wiring or connection systems of this type are often referred to as looms or harnesses. In such cases a wire harness is advantageous as it not only reduces the amount of space required, it also improves robustness and streamlines the installation/serviceability of systems as wires may be kept bound together, reducing individual pinching or over-stretching of cables.

According to one embodiment the connection system may be configured as a harness and may comprise more than two end sections for contact with multiple contact pads. Such a connection system may be advantageous in providing an electrical connection to multiple components or with multiple contact pads of a specific component e.g. for reasons of robustness. Additionally an end section could be provided with a specific shape adapted for providing strain relief.

The connection system or harness may also comprise multiple body sections. Each body section may present a branch to a different system component or compartment. The branching of body sections could be achieved by printing a specified 2D-layout during manufacture of the connection system or it could be realized upon installation of the harness by making use of the flexibility of the materials used. This might be achieved by folding, cutting, tearing or curving body sections into the desired configuration or by using tertiary components such as clamps or springs for guiding and supporting the respective body sections. It must be understood that if the connection system has multiple body sections these sections may have different lengths, depending on the architecture of the electrical system in which the connection system provides its function.

In the above embodiments having multiple end sections, all end sections may be electrically connected together by a common electrical conductor. In an embodiment, the connection system comprises a plurality of electrical conductors, being mutually insulated from each other. It can be understood that each individual conductor may support the transfer of a separate electrical signal between two or more components. This may thus depend on the number of body sections and end sections. By having a plurality of mutually insulated cores integrated into a connection system, the effort and amount of mistakes made upon routing electrical interconnects may be reduced.

In a particular embodiment, such mutually insulated conductors may be arranged to run adjacent and in parallel to each other over at least part of the length of the body section. Here, an offset between conductive cores may be arranged such that over part or the whole length of the cores a constant offset is maintained. Having a constant offset between two electrical pathways has a positive effect on the electrical impedance of the pathways, with increasing importance upon increasing electrical operating frequencies.

The present invention also relates to an electrical system comprising a first electrical component and a second electrical component electrically connected together by a connection system as described above or hereinafter. It can be understood that depending on the application the connection system can have any number of end sections and body sections whereby a plurality of electrical components can be interconnected.

The connection system may connect to the electrical component via a contact pad provided on the electrical component. In some embodiments the electrical component may comprise a PCB and the PCB may be provided with a contact pad. This contact pad may comprise a layer of copper or gold, being commonly applied materials in the manufacture of PCBs. The size of the surface area of the contact pad may be of similar size to that of the contact surface of the end section it contacts. The size of the contact surface and of the contact pad may be based on the required electrical and mechanical properties. As such, an increase of expected mechanical force or electrical current may require an increase in the area of the contact surface while maintaining a constant thickness.

In an embodiment, at least one of the components is a battery and the connection system is part of a signal transmission path of a battery management system. The battery management system may comprise other components such as PCBs and/or sensors monitoring battery performance. The connection system may provide signal transport between any combination of these components.

The information carried by the connection system could be used by a battery management system for triggering a request for servicing the battery cells. Detection of battery cell underperformance is an example of a situation where the underperforming battery cell may be replaced by a properly performing battery cell.

The invention further relates to a method for servicing an electrical system comprising an electrical component and a connection system, the connection system comprising an electrical conductor with an end section having a lower contact surface with electrically conductive adhesive, the electrical component having a contact pad to which the lower contact surface is connected by the adhesive, whereby the method comprises:
- physically cutting through the electrical conductor, leaving a disconnected end section attached to the contact pad; and
- installing a new connection system by adhering a lower contact surface of the new connection system onto the disconnected end section.

When removing the underperforming battery cell the installed connection system can be physically cut, severing the body section of the installed connection system. One end section stays connected with the removed battery cell, while the other end section stays behind with the remaining battery cell. Installing a new battery cell requires a new connection system to be installed. Depending upon the particular situation, two or more connection systems may need to be cut away and replaced. It will also be understood that reference to upper or lower e.g. lower contact surface, is not intended to be limiting and the connection system can be used in any orientation.

The above method is the preferred method of implementing a service operation. It will nevertheless be understood that the connection system described above may have many other advantageous uses. In particular, while it may often be preferable to adhere a replacement connection system over the severed end section of the old connection system, other variants are possible. In particular, if the contact pad has adequate space, the contact surface of the new connection system may be adhered adjacent to the old end section. Alternatively, the electrical component may have further contact pads that can be used.

In the preferred method, the new connection system is installed by adhering the lower contact surface of the new connection system on top of the disconnected end section using electrically conductive adhesive. The electrically conductive adhesive may be already present on the disconnected end section or may be applied during the servicing operation. Most preferably, it will be present on the lower surface of the new connection system.

This may best be achieved where the disconnected end section has an upper contact surface on its upper side and the lower contact surface of the new connection system is adhered to the upper contact surface. The upper contact surface may be covered prior to servicing by a cover such as cover strip which is then removed prior to installing the new connection system. It will be understood that the cover strip must have been present throughout the initial period of operation of the electrical system in order to ensure that the upper contact surface was protected. Preferably, the cover is also electrically insulating. Although cover strips, such as adhesive, peelable cover strips are convenient, it will be understood that other alternative covers and protections may be provided. Thus the cover may be in the form of a portion of insulation that is removed e.g. by cutting or rubbing away in order to expose the upper contact surface.

The new connection system may be a connection system as described above or hereinafter. It may be identical or substantially identical to the connection system that is being replaced. In this sense, substantially identical is intended to mean that it has the same dimensions and materials but may have been produced in a subsequent batch. It will nevertheless be understood that the new connection system may need only to be similar, i.e. achieving the objective of bridging the removed connection for the remaining service lifetime of the electrical system.

The method is particularly applicable to electrical systems comprising a battery having a plurality of individual cells, each having battery management PCB's connected together in series by a plurality of connection systems. The method may comprise replacing a designated battery cell by cutting through two connection systems to isolate the designated battery cell and restoring the series connection of the remaining cells using the new connection system. In general, the designated cell may be physically removed and replaced, whereby two connections must be restored before and after the replaced cell. It is of course not excluded that the designated cell may be isolated but left in-situ, whereby the new connection may bridge between two remaining cells. Another cell may be added at a different location in the battery. To be clear, in the embodiment described, there will be additional power connections to the cells, which will also need to be replaced by other means and the present invention is not directed to such power connections, which may be characterized by current capacities of sometimes significantly more than 1A.

### BRIEF DESCRIPTION OF THE DRAWINGS

Figure 1 shows a schematic perspective view of ana electrical system according to the present invention.
Figure 2A shows a plan view of the underside of the connection system of Figure 1.
Figure 2B shows an end view of the connection system of Fig. 2A in the direction IIB.
Figure 2C is a cross section through the connection system of Fig 2A at the position IIC-IIC.
Figure 3 shows a perspective view of the end section of the connection system of Figure 1prior to use.
Figure 4 shows a perspective view of the end section of Fig. 3 in use.
Figure 5 shows a view of the end section of Fig. 4 while servicing the electrical system of Fig. 1.
Figure 6 shows a side view of part of the electrical system of Fig.1 during servicing.
Figure 7 shows a second embodiment of a connection system according to the invention;
Figure 8 shows a third embodiment of a connection system according to the invention. Figure 9 shows a third embodiment of a connection system according to the invention with two electrical conductors. Figure 10 shows a schematic perspective view of an alternative way of using the connection system for service of an electrical system.

### DESCRIPTION OF ILLUSTRATIVE EMBODIMENTS

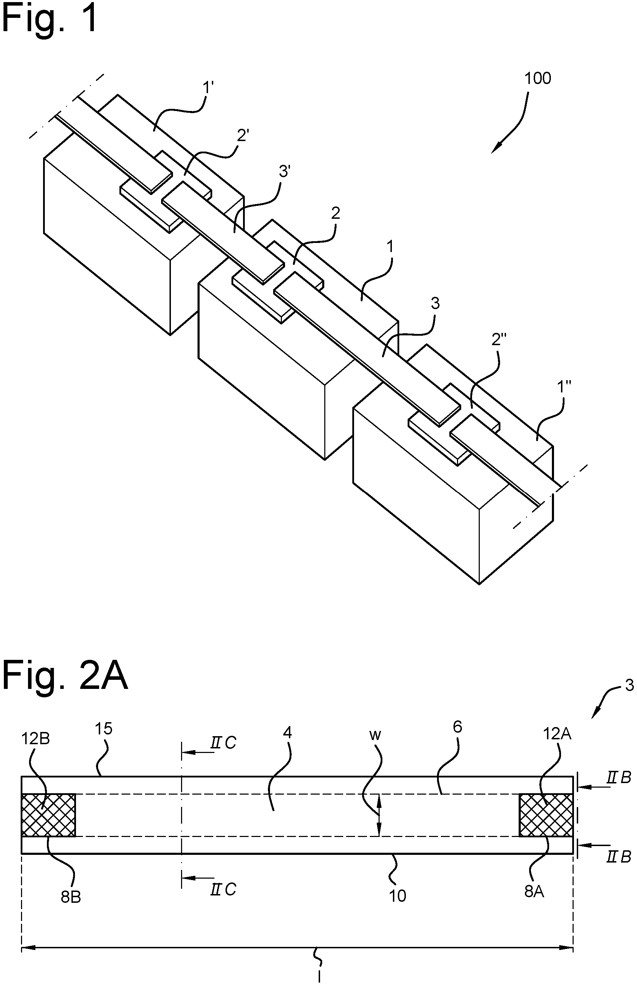

Figure 1 shows a schematic perspective view of an electrical system 100 comprising a number of battery cells 1, 1', 1" each having a battery management PCB 2, 2', 2" wherein the PCBs 2, 2', 2" are electrically connected by connection systems 3, 3' according to the invention.

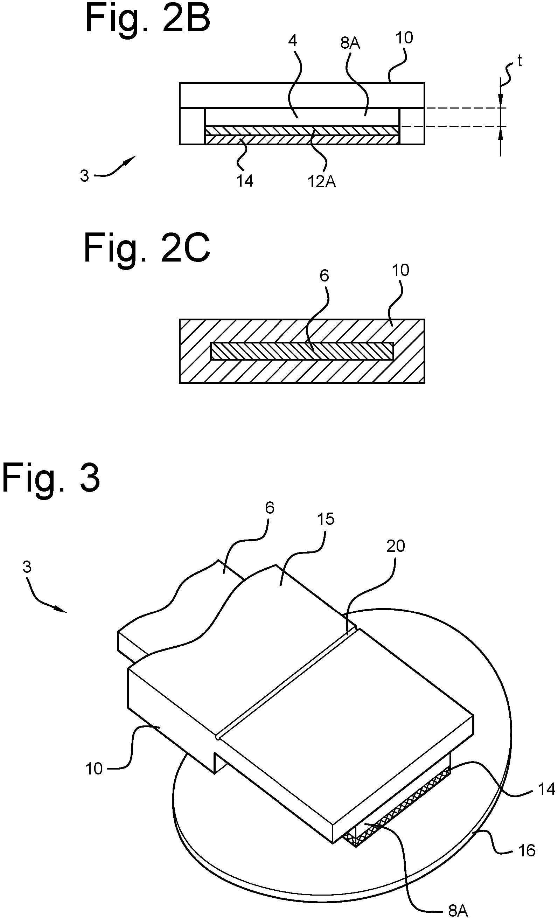

Figure 2A shows a plan view of the connection system 3 of Figure 1, viewed from below. It will be understood that the other connection system 3' is identical. Figure 2B shows an end view of the connection system 3 of Figure 1, viewed in the direction IIB.

The connection system 3 comprises an electrical conductor 15 having a conductive core 4 with a body section 6 and first and second end section 8A, B. The conductive core 4 is electrically insulated by insulating layer 10. At the first and second end section 8A, B, the insulating layer 10 is partially removed to expose lower contact surfaces 12A, 12B. The lower contact surfaces 12A, 12B are covered with a layer of electrically conducting adhesive 14.

The conductive core 4 has a thickness t, a width w and a length l. In the illustrated embodiment according to Figure 2, the core 4 has a flat, rectangular cross-section that is constant over the length of the core 4. In particular, the end sections 8A, 8B have the same cross-section as the body section 6. It will be understood that other shapes are possible and that the end sections 8A, 8B may have a different width to the body section 6. It will also be understood that the end sections 8A, 8B can have various shapes in plan view, including circular, elliptical, triangular, square, polygonal and the like, except at its connection with the body section 6.

Figure 2C shows a cross-section through the connection system at the location IIC-IIC in Fig. 2A. It shows the body section 6 of the conductive core 4, fully embedded in the insulating layer 10. It will be appreciated that the illustrated dimensions are exaggerated for the sake of explanation and the actual dimensions may be very different. In the proposed example, the core 4 is of hard as-rolled copper alloy foil, having a thickness of 35 microns and a width of around 4 mm. The insulating layer 10 is PET having a thickness of 50 micron, laminated on both sides of the conductive core 4 using a 20 micron label adhesive.

Figure 3 shows a perspective detailed view of the end section 8A of the connection system 3 of Figure 1 in a condition prior to use. In this condition, the electrically conducting adhesive 14 is covered by a protective foil 16. For the sake of illustration, the protective foil 16 is shown to be larger than the end section 8A but it will be understood that it may have the same dimensions as the region of electrically conducting adhesive 14. In fact, the electrically conducting adhesive 14 may be applied together with the protective foil 16 as a backing or liner during manufacture of the connection system 3. In the illustrated embodiment, the adhesive 14 is a pressure sensitive transfer tape with anisotropic electrical conductivity. The protective foil 16 a silicone treated polycoated Kraft paper

Also visible in this view is a separation line 20 partially penetrating the insulating layer 10 at a position along the electrical conductor 15 between the end section 8A and the body section 6. The purpose of this separation line 20 will be discussed further below.

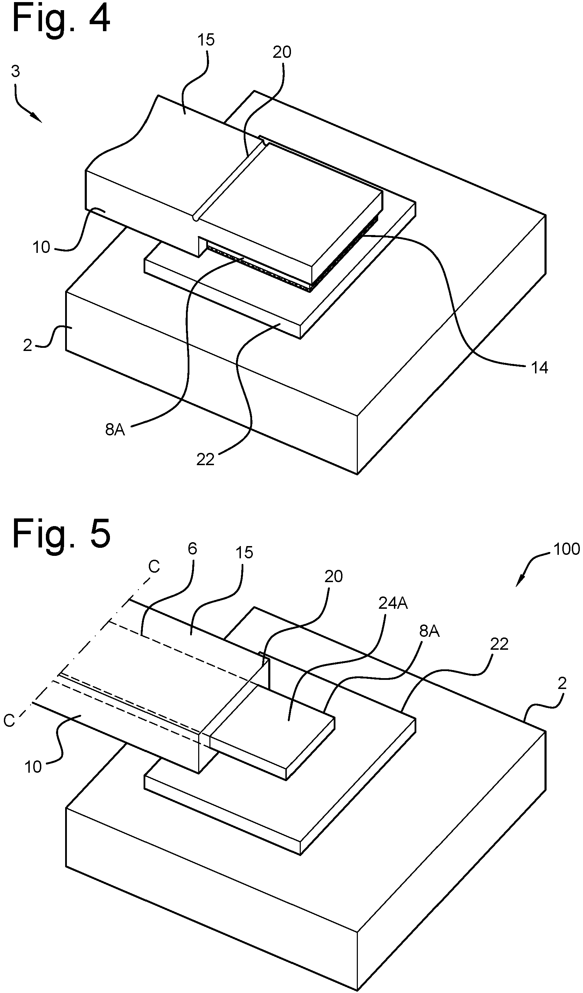

Figure 4 shows a perspective detailed view of the end section 8A of the connection system 3 of Figure 3 in a condition of use. The protective foil 16 has been removed and the adhesive 14 is affixed to the PCB 2. The PCB 2 has a an electrically conductive contact pad 22 to receive the end section 8A. In this view, the contact pad 22 is larger than the end section 8A and extends beyond the adhesive 14. It will nevertheless be understood that the contact pad 22 may be smaller than or the same size as the adhesive 14, such that it is covered completely and the insulating layer 10 largely covers exposed regions of the contact pad 22. It will also be understood that fully insulated versions of the connection system 3 may be contemplated in which the end section 8A, the conductive adhesive 14 and the contact pad 22 are all fully covered or enclosed by the insulating layer 10. The adhesive 14 is permanent, meaning that the adhesive connection to the contact pad 22 cannot be broken or released without potential damage.

Figure 5 shows a view similar to that of Fig. 4 in which the electrical system 100 is being serviced, requiring a new connection to be made to the contact pad 22 of the PCB 2. The electrical conductor 15 has been severed at the location C-C, through the body section 6, leaving the end section 8A attached to the contact pad 22. The electrical conductor 15 is sufficiently thin that it may be easily cut with scissors or shears. The battery 1", that was previously connected by the connection system 3 can thus be removed. Additionally, the part of the insulating layer 10 overlying the end section 8A has been lifted and broken at the separation line 20, exposing an upper contact surface 24A.

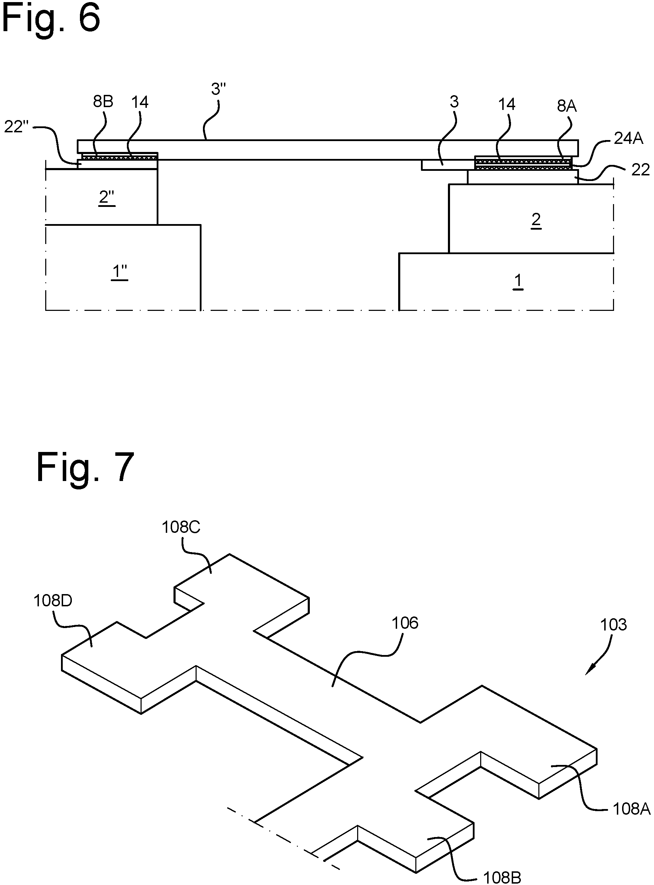

Figure 6 shows a schematic side view of the electrical system 100 of Fig. 5, with a new battery 1" installed to replace the previous battery. The battery 1" has a PCB 2" with a contact pad 22". A new connection system 3" is installed over the previously severed connection system 3 by adhering the end section 8A onto the upper contact surface 24A. The other end section 8B is connected directly to the contact pad 22". It will be appreciated that the at the end section 8A, two layers of conductive adhesive 14 are present, while at the end section 8B, only one layer of conductive 14 adhesive is present. Further replacement connections can be made by repeating the above described process, subject to the multiple layers of electrically conductive adhesive 14 having adequate conductivity.

The illustrated electrically conductive adhesive 14 may be of any suitable type, providing for electrical conduction through at least its thickness, i.e. in the Z-axis. Electrically conductive adhesives can have varying properties regarding the directions of electrical conduction, including those supporting only z-axis electrical conductivity and those supporting electrical conductivity along all three axes, X, Y and Z.

Although Figures 1 to 6 have shown a simple connection system with just one body section 6 and two end sections 8A, B, more complex configurations may be provided. Figure 7 shows a perspective view of a connection system 103 according to a second embodiment comprising more than two end sections. The illustrated embodiment is an example showing a single body section 106 with four end sections 108A-D.

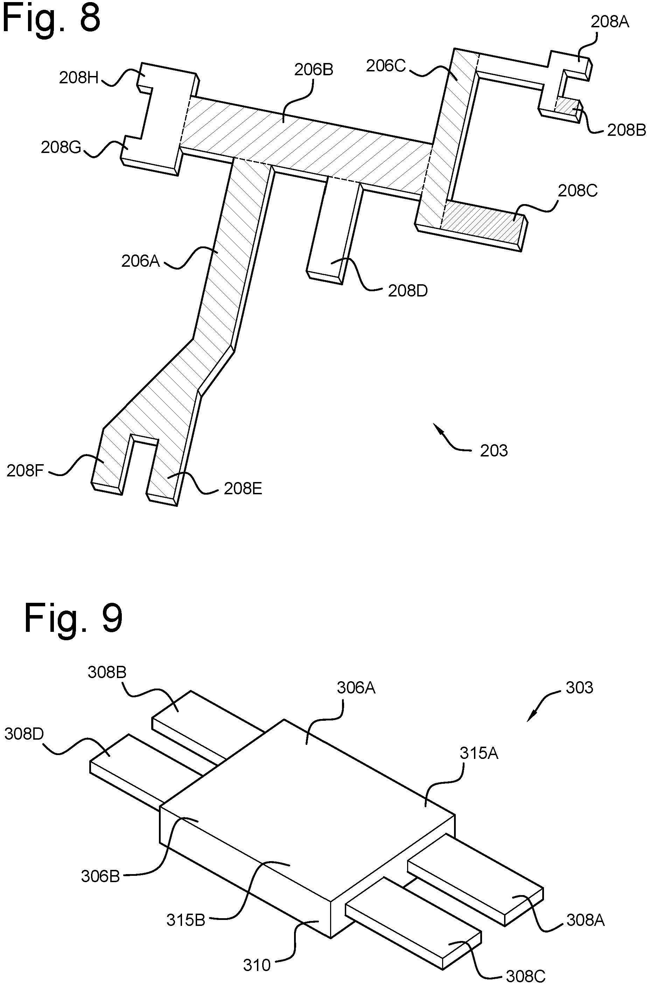

Figure 8 shows a connection system 203 according to a third embodiment consisting of multiple body sections 206A-C and multiple end sections 208A - H. It will be noted that these body sections 206 A-C have varying lengths and widths and that also the end sections 208 A-H can have varying size.

Figure 9 shows a third embodiment of a connection system 303 including two electrical conductors 315A, B mutually insulated from each other. The first electrical conductor 315A has a first body section 306A with end section 308A, B. The second electrical conductor 315B has a second body section 306B with end sections 308C, D. The first and second body sections 306A,B are embedded in insulating layer 310 to be perfectly parallel to each other, ensuring minimal impedance so that the connection system 303 is highly suited to high frequency signal transmission.

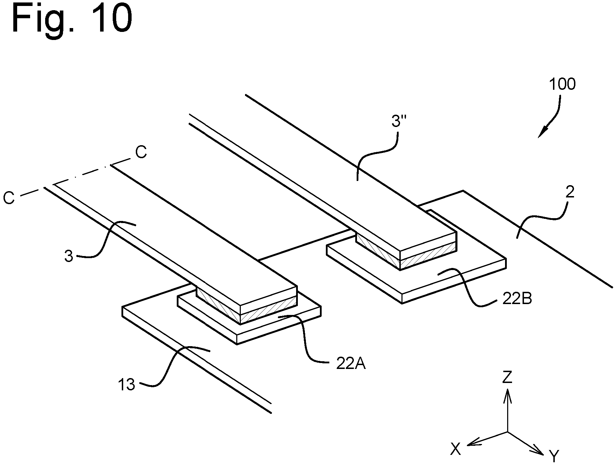

Figure 10 shows a schematic perspective view of an alternative way of using the connection system 3 for service of an electrical system 100. In this case, the PCB 2 has two contact pads 22A,B either of which can be used for signal connection to the PCB 2 for battery management purposes. In other words, the PCB 2 is redundantly configured with respect to connection. Here a previously installed connection system 3, connected with contact pad 22A has been cut at location C-C and a new connection system 3" has been installed on the adjacent contact pad 22B.

Although certain embodiments have been depicted and described, the skilled person will understand that any number of alternative shapes and configurations of connection system may be implemented according to the intended use.

## Claims

1. A connection system for providing a replaceable electrical connection to a contact pad of an electrical component, comprising:
an electrical conductor comprising a conductive core having a body section and at least a first end section, wherein the conductive core is electrically insulated except for the end section;
wherein the end section has a contact surface for electrical connection with the contact pad and
an electrically conductive adhesive provided on the contact surface for connecting with the contact pad.

2. The connection system according any one of the preceding claims, wherein the conductive core comprises copper, aluminium, conductive ink and/or coatings comprising metal powder.

3. The connection system according to any one of the preceding claims, wherein the electrical insulation comprises a flexible polymer, preferably polyester, polyimide, polypropylene, polyethylene, and/or PET based films, most preferably polypropylene.

4. The connection system according to one of the preceding claims, wherein the body section and/or the end section has a cross-sectional shape that is flat.

5. The connection system according to any one of the preceding claims, wherein the thickness of the body section is between 1 µm and 200 µm, preferably between 20 µm and 40 µm.

6. The connection system according to any one of the preceding claims, wherein the width of the body section is between 0.4 mm and 15 mm, preferably 0.7 mm to 5 mm.

7. The connection system according to any one of the preceding claims, wherein the end section has a width that is equal to or greater than that of the body section, and/or a thickness equal to or less than that of the body section.

8. The connection system according to any one of the preceding claims, wherein the end section has a top side and a bottom side, each provided with a contact surface optionally, wherein one of the contact surfaces is protected during use by a removable cover strip, preferably comprised of electrically insulating material.

9. An electrical system comprising at least a first electrical component and at least a second electrical component, electrically connected together by a connection system according to any one of the preceding claims.

10. A method for servicing an electrical system comprising an electrical component and a connection system, the connection system comprising an electrical conductor with an end section having a lower contact surface with electrically conductive adhesive, the electrical component having a contact pad to which the lower contact surface is connected by the adhesive, the method comprising:
at least partially removing the electrical conductor; and
installing a new connection system by adhering a lower contact surface of the new connection system onto the contact pad or on top of the disconnected end section using electrically conductive adhesive.

11. The method according to claim 10, wherein at least partially removing the electrical conductor comprises physically cutting through the electrical conductor, leaving a disconnected end section attached to the contact pad.

12. The method according to claim 11, wherein the disconnected end section has an upper contact surface on its upper side and the lower contact surface of the new connection system is adhered to the upper contact surface.

13. The method according to claim 12, wherein the upper contact surface is covered by a, preferably insulating, cover strip and the method comprises removing the cover strip prior to installing the new connection system.

14. The method of any one of claims 10 to 13, wherein the electrical system comprises a battery having a plurality of individual cells, having battery management PCB's connected together in series by a plurality of connection systems and the method comprises replacing a designated battery cell by cutting through two connection systems to isolate the designated battery cell and restoring the series connection of the remaining cells using the new connection system.

15. The connection system according to any one of claims 1 to 8, wherein the conductive core consists of a body section extending between a first end section and a second end section.

16. The connection system according to any one of claims 1 to 8 or 15, wherein the electrically conductive adhesive has a peel off strength (according to ASTM D3330) of at least 0.5 N/cm, preferably 3 N/cm or even 50 N/cm.

17. The connection system according to any one of claims 1 to 8, 15 or 16, wherein the electrically conductive adhesive is a pressure sensitive or thermally activated adhesive.

18. The connection system according to any one of claims 1 to 8 or 15 to 17, wherein the adhesive is electrically conductive in at least a thickness direction of the adhesive.

19. The connection system according to any one of claims 1 to 8 or 15 to 18, wherein the conductive adhesive has a thickness between 10 µm and 200 µm, preferably between 20 µm and 80 µm.

20. The connection system according to any one of claims 1 to 8 or 15 to 19, wherein the electrically conductive adhesive is provided on the contact surface over a surface area of at least 2 mm² to 400 mm², preferably 3 mm² to 25 mm².

21. The connection system according to any one of claims 1 to 8 or 15 to 20, wherein the length of the body section between the end sections is between 1 cm and 200 cm.

22. The connection system according to any one of claims 1 to 8 or 15 to 21, comprising more than two end sections.

23. The connection system according to any one of claims 1 to 8 or 15 to 22, comprising multiple body sections.

24. The connection system according to claim 23, wherein the body sections have different lengths.

25. The connection system according to any one of claims 1 to 8 or 15 to 24, comprising a plurality of electrical conductors mutually insulated from each other.

26. The connection system according to claim 25, wherein the electrical conductors are parallel and adjacent to each other.

27. An electrical system comprising at least a first electrical component and at least a second electrical component, electrically connected together by a connection system according to any one of claims 15 to 26.

28. The electrical system according to claim 27, wherein each electrical component comprises a printed circuit board (PCB) and the contact pad is provided on the respective PCB.

29. The electrical system according to claim 27 or claim 28, wherein at least one of the components is a battery and the connection system is part of a signal transmission path of a battery management system.

30. The method according to any one of claims 10 to 14, wherein the new connection system is a connection system according to any one of claims 1 to 8 or 15 to 26, preferably identical to the connection system that is being replaced.
